Europäisches Patentamt

European Patent Office

Office européen des brevets

(11) Veröffentlichungsnummer: **0 328 748**

**A2**

## (12) EUROPÄISCHE PATENTANMELDUNG

(21) Anmeldenummer: 88119517.6

(22) Anmeldetag: 24.11.88

(51) Int. Cl.4: **G02B 6/44**

(30) Priorität: 16.02.88 DE 3804763

(43) Veröffentlichungstag der Anmeldung:
**23.08.89 Patentblatt 89/34**

(84) Benannte Vertragsstaaten:
**CH DE FR GB IT LI**

(71) Anmelder: **KABELMETAL ELECTRO GMBH**
**Kabelkamp 20 Postfach 260**
**D-3000 Hannover 1(DE)**

(72) Erfinder: **Ziemek, Gerhard, Dr.-Ing.**
**Bunzlauer Strasse 6**
**D-3012 Langenhagen(DE)**
Erfinder: **Staschewski, Harry, Dipl.-Ing.**
**Werlhofstrasse 23**
**D-3012 Langenhagen(DE)**

(54) **Verfahren und Vorrichtung zum Freilegen von Lichtwellenleitern einer Bündelader.**

(57) Es wird ein Verfahren mit zugehöriger Vorrichtung angegeben, mit dem die Lichtwellenleiter einer Bündelader, die in einem extrudierten Schlauch angeordnet sind, freigelegt und einer Wiederverwendung zugänglich gemacht werden können. Der Schlauch wird dazu über einem mechanisch stabilen Schutzelement axial aufgetrennt, das in den Schlauch hineinragt und unter dem die Lichtwellenleiter hindurchgezogen werden. Die Lichtwellenleiter sind dadurch vor dem Trennwerkzeug und vor dem aufgetrennten und abzubiegenden Schlauch geschützt. Sie können einzeln mit geregelter Drehzahl auf Spulen aufgewickelt werden.

EP 0 328 748 A2

Die Erfindung bezieht sich auf ein Verfahren zum Freilegen von Lichtwellenleitern einer Bündelader, in der mindestens zwei Lichtwellenleiter in einem aus Kunststoff bestehenden Schlauch angeordnet sind, sowie auf eine Vorrichtung zur Durchführung des Verfahrens.

Lichtwellenleiter - im folgenden kurz "LWL" genannt -dienen der Übertragung von Signalen bzw. Daten im nachrichtentechnischen Bereich. Sie können nach entsprechender Behandlung grundsätzlich ebenso zur Herstellung von Kabeln und Leitungen verwendet werden wie metallische Leiter. Ein dafür bekanntes LWL-Element ist beispielsweise die Bündelader, in welcher beispielsweise 10 LWL mit Überlänge in einem extrudierten Schlauch untergebracht sind. Die Hohlräume der Bündelader können mit einer viskosen Masse gefüllt sein, wenn Längswasserdichtigkeit erreicht werden soll. Eine Bündelader kann beispielsweise eine Länge von 12 km haben.

Obwohl die Funktionsfähigkeit der LWL während der Fertigung ständig überprüft wird, kann es geschehen, daß einzelne LWL in der fertigen Bündelader nicht mehr funktionsfähig sind. Eine solche Bündelader ist nicht brauchbar. Sie wird daher bisher insgesamt verschrottet, auch wenn sie noch funktionsfähige LWL enthält. Wegen der sehr großen Länge der Bündelader ist es aber nicht möglich, die LWL aus dem Schlauch herauszuziehen, um sie einer Wiederverwendung zugänglich zu machen. Da die LWL teure Bauteile sind, ergeben sich bei dieser Vorgehensweise erhebliche wirtschaftliche Nachteile.

Der Erfindung liegt die Aufgabe zugrunde, ein Verfahren anzugeben, mit dem es auf einfache Weise möglich ist, die LWL einer Bündelader als Einzelelemente zurückzugewinnen.

Diese Aufgabe wird gemäß der Erfindung dadurch gelöst,
- daß die Bündelader mittels eines Abzugs von einem Vorrat abgezogen und durch eine Trennvorrichtung geführt wird, in welcher der Schlauch mittels eines Trennwerkzeugs in axialer Richtung aufgetrennt wird und
- daß im Bereich der Trennvorrichtung ein in den Schlauch hineinragendes Schutzelement aus mechanisch stabilem Material angeordnet wird, auf dessen dem Trennwerkzeug abgewandter Seite die LWL entlang geführt werden.

Mit diesem Verfahren ist es auf einfache Weise möglich, die LWL einer Bündelader von dem sie umgebenden Schlauch zu befreien und einer Wiederverwendung zugänglich zu machen. Von besonderer Bedeutung ist, daß die LWL beim Auftrennen des Schlauches durch das Schutzelement sowohl gegenüber dem Trennwerkzeug als auch gegenüber dem Schlauch selbst geschützt sind, der nach dem Trennvorgang in irgendeiner Form abgebogen werden muß. Die LWL können nach dem Freilegen einzeln auf Spulen aufgewickelt werden. Sie stehen dann für eine neue Verarbeitung direkt zur Verfügung. Nicht mehr funktionsfähige LWL können leicht identifiziert werden. Das gilt insbesondere dann, wenn ein LWL im Verlauf seiner Länge zerbrochen ist.

Vorteilhafte Ausgestaltungen der Erfindung gehen aus den Unteransprüchen hervor.

Verfahren und Vorrichtung nach der Erfindung werden im folgenden an Hand der Zeichnungen als Ausführungsbeispiel erläutert.

Es zeigen:

Fig. 1 in schematischer Darstellung eine Vorrichtung zur Durchführung des Verfahrens.

Fig. 2 eine Einzelheit der Vorrichtung in vergrößerter Darstellung.

Fig. 3 einen Querschnitt durch eine LWL-Bündelader in nochmals vergrößerter Darstellung.

In einem drehbaren Vorratsbehälter 1 - im folgenden "Teller 1" genannt - ist eine große Länge einer LWL-Bündelader 2 vorhanden. Die Bündelader 2 kann in diesem Vorrat beispielsweise eine Länge von 12 km haben. Sie besteht gemäß Fig. 3 aus einem Schlauch 3 und mindestens zwei LWL 4, die gemeinsam vom Schlauch 3 umgeben sind. Der Schlauch 3 besteht aus mindestens einer Kunststoffschicht. Er ist um die LWL 4 herum extrudiert. Die Hohlräume innerhalb des Schlauches 3 können mit einer viskosen Masse ausgefüllt sein, so daß die Bündelader 2 längswasserdicht ist.

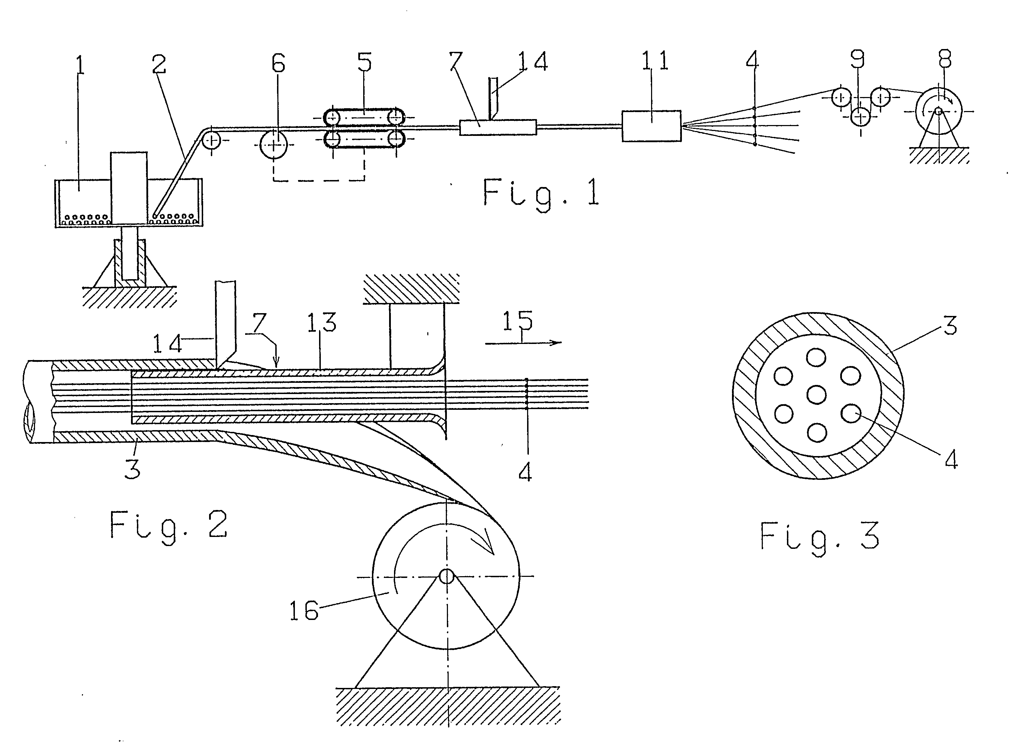

Die in dem Schlauch 3 der Bündelader 2 angeordneten LWL 4 sollen mit der in den Fig. 1 und 2 dargestellten Vorrichtung freigelegt werden. Dazu kann der Teller 1 sehr leichtgängig gelagert sein, so daß beim Abzug der Bündelader 2 keine großen Zugkräfte aufgebracht werden müssen. Der Teller 1 kann drehzahlgeregelt angetrieben werden. Als Teller 1 können auch die bei der Kabelherstellung verwendeten Ablaufvorrichtungen verwendet werden, mit denen der Ablauf der Bündelader 2 geregelt werden kann. In Abzugsrichtung der Bündelader 2 ist hinter dem Teller 1. ein Abzug 5 angeordnet, der die Bündelader 2 aus dem Teller 1 herauszieht. Er ist im dargestellten Ausführungsbeispiel als Raupenabzug ausgebildet. Vor dem Abzug 5 ist ein Meßgerät 6 angebracht, das feststellt, ob die Bündelader 2 bewegt wird. Das Meßgerät 6 kann beispielsweise ein mit der Bündelader 2 mitlaufendes Rad sein. Es ist mit dem Abzug 5 gekoppelt. Im Falle eines Stillstandes der Bündelader 2 wird der Abzug 5 durch das Meßgerät 6 angehalten.

Hinter dem Abzug 5 ist eine Trennvorrichtung 7 angeordnet, deren genauerer Aufbau aus Fig. 2 hervorgeht. In der Trennvorrichtung 7 wird der Schlauch 3 der Bündelader 2 in axialer Richtung aufgetrennt. Die dadurch freigelegten LWL 4 können einzeln auf Spulen 8 aufgewickelt werden, die mit geregelter Drehzahl angetrieben werden. Für die Drehzahlregelung können in üblicher Technik leichtgängige Tänzer 9 eingesetzt werden. Auch die auf die LWL 4 einwirkende Zugkraft wird eingestellt bzw. geregelt. Dazu kann beispielsweise ein verstellbares Gewicht verwendet werden. Wenn die Bündelader 2 durch Einbringung einer viskosen Masse längswasserdicht ausgeführt ist, können die LWL 4 vor dem Aufwickeln in einer Reinigungsvorrichtung 11 gereinigt werden. Dazu können in der Reinigungsvorrichtung 11 Düsen oder Filze angeordnet sein, durch welche die Masse abgestreift wird. Es ist jedoch auch möglich, die LWL 4 in der Reinigungsvorrichtung 11 durch eine Reinigungsflüssigkeit hindurchzuziehen.

Die Trennvorrichtung 7 weist weist gemäß Fig. 2 ein Schutzelement 13 aus mechanisch stabilem Material auf. Es kann aus Metall, beispielsweise aus Stahl, oder aus Kunststoff bestehen. Es ragt bis in den Schlauch 3 der Bündelader 2 hinein. Im Bereich des Schutzelements 13 ist ein Trennwerkzeug 14 - im folgenden "Messer 14" genannt - angebracht, das den Schlauch 3 bei Bewegung der Bündelader 2 in Richtung des Pfeiles 15 axial durchtrennt. Der Schlauch 3 kann danach durch Abbiegen auf eine Spule 16 aufgewickelt werden. Es ist jedoch auch möglich, den Schlauch 3 unmittelbar hinter der Trennvorrichtung 7 in kleine Stükke zu zerlegen, beispielsweise zu zerhacken.

Die Spule 16 kann so angetrieben werden, daß sie beim Aufwickeln des aufgetrennten Schlauches 3 als zusätzlicher Abzug wirkt. Um ein einwandfreies Abziehen des aufgetrennten Schlauches 3 auf jeden Fall sicherzustellen, kann für denselben hinter der Trennvorrichtung 7 ein gesonderter Abzug angeordnet werden. Dazu kann beispielsweise ein angetriebenes Walzenpaar verwendet werden.

Das Schutzelement 13 liegt beim Betrieb der Vorrichtung zwischen Schlauch 3 und LWL 4, so daß der Schlauch 3 auf einer Seite und die LWL 4 auf der anderen Seite des Schutzelements 13 entlang geführt werden. Das den Schlauch 3 durchtrennende Messer 14 kann also die LWL 4 nicht beschädigen, da dieselben durch das Schutzelement 13 geschützt sind. In einfacher Ausführungsform, die bei Einsatz nur eines Messers 14 ausreicht, kann das Schutzelement 13 als vorzugsweise langgestreckter Steg ausgebildet sein, der quer zu seiner Hauptausdehnung gebogen ist. Er dient gleichzeitig als Führung für den aufgetrennten Schlauch 3, der im Bereich des Schutzelements 13 seitlich abgebogen wird. Das Schutzelement 13 verhindert dadurch auch, daß die Kanten des aufgetrennten Schlauches 3 mit den LWL 4 in Berührung kommen. Eine Beschädigung der LWL 4 durch den aufgetrennten Schlauch 3 ist also ebenfalls ausgeschlossen. Falls der Schlauch 3 durch das Messer 14 nicht ganz durchtrennt ist, kann das Schutzelement 13 gleichzeitig dazu dienen, den Schlauch 3 beim seitlichen Wegziehen an der Schnittstelle quasi aufzureißen.

In Fig. 2 ist nur ein Messer 14 dargestellt. Es können aber auch zwei oder mehr Messer 14 verwendet werden, die um die Bündelader 2 herum in Umfangsrichtung versetzt angeordnet werden. In diesem Fall wird das Schutzelement 13 - so wie in Fig. 2 dargestellt - zweckmäßig als Rohr ausgeführt, durch welches die LWL 4 hindurchgezogen werden. In den folgenden Ausführungen wird zur Berücksichtigung der zeichnerischen Darstellung statt des Wortes "Schutzelement" das Wort "Schutzrohr" verwendet.

Statt eines feststehenden Messers 14 könnte jeweils auch eine drehende Säge (Kreissäge) oder ein Reibrad eingesetzt werden. Insbesondere im letztgenannten Fall ist es zweckmäßig, das Schutzrohr 13 zu kühlen, um die LWL 4 vor zu großer Erwärmung zu schützen.

Der Abzug 5 ist in Fig. 1 als Raupenabzug dargestellt. Es könnte mit entsprechend großem Durchmesser auch ein Scheibenabzug eingesetzt werden. Der Abzug 5 wird zweckmäßig vor der Trennvorrichtung 7 angeordnet, so daß die Bündelader 2 in die Trennvorrichtung 7 hineingeschoben wird. Er könnte jedoch auch hinter der Trennvorrichtung 7 angebracht sein, wenn sichergestellt ist, daß die Bündelader 2 einwandfrei und ohne Belastung der LWL 4 bis zur Trennvorrichtung 7 geführt wird.

Das Verfahren nach der Erfindung arbeitet beispielsweise wie folgt:

Eine Bündelader 2 wird durch den Abzug 5 vom Teller 1 abgezogen und dabei über das Meßgerät 6 geführt, welches die Bewegung der Bündelader 2 feststellt. Wenn beispielsweise in der Trennvorrichtung 7 ein Fehler auftritt und die Bündelader 2 dort nicht weiterbewegt wird, würde der Abzug 5 ständig weiter schieben und dabei auf der Bündelader 2 rutschen. Um das zu vermeiden, wird der Abzug 5 durch ein Signal des Meßgeräts 6 angehalten, wenn die Bündelader 2 nicht mehr bewegt wird. Gleichzeitig müßte ein ungeregelter leichtgängiger Teller 1 abgebremst werden.

Bei ungestörtem Betrieb wird die Bündelader 2 durch den Abzug 5 in die Trennvorrichtung 7 geschoben, in welcher der Schlauch 3 durch das Messer 14 axial aufgetrennt wird. Zu Beginn des Verfahrens werden dazu die in der Bündelader 2 enthaltenen LWL 4 durch das Schutzrohr 13 der Trennvorrichtung 7 hindurchgezogen, während der Schlauch 3 außen über das Schutzrohr 13 gezogen wird. Die LWL 4 werden hinter der Trennvorrichtung 7 durch die Reinigungsvorrichtung 11 gezogen und anschließend einzeln mit geregelter Drehzahl auf die Spulen 8 aufgewickelt.

Der Schlauch 3 wird im Bereich oder hinter der Trennvorrichtung 7 kontinuierlich abgezogen und entweder auf die Spule 16 aufgewickelt oder unmittelbar in kleine Stücke zerhackt. Dabei dient das Schutzrohr 13 als Führung des aufgetrennten Schlauches 3, als Schutz für die LWL 4 gegenüber dem aufgetrennten Schlauch 3 und gegebenenfalls als zusätzliches Trennelement, wenn der Schlauch 3 durch das Messer 14 nicht ganz durchtrennt ist. Die noch funktionsfähigen LWL 4 sind nach Beendigung des Verfahrens jeder auf einer eigenen Spule 8 aufgewickelt und damit für eine neue Verarbeitung verwendbar.

**Ansprüche**

1. Verfahren zum Freilegen von Lichtwellenleitern einer Bündelader, in der mindestens zwei Lichtwellenleiter in einem aus Kunststoff bestehenden Schlauch angeordnet sind, dadurch gekennzeichnet,
- daß die Bündelader (2) mittels eines Abzugs (5) von einem Vorrat abgezogen und durch eine Trennvorrichtung (7) geführt wird, in welcher der Schlauch (3) mittels eines Trennwerkzeugs (14) in axialer Richtung aufgetrennt wird und
- daß im Bereich der Trennvorrichtung (7) ein in den Schlauch (3) hineinragendes Schutzelement (13) aus mechanisch stabilem Material angeordnet wird, auf dessen dem Trennwerkzeug (14) abgewandter Seite die Lichtwellenleiter (4) entlang geführt werden.

2. Verfahren nach Anspruch 1, dadurch gekennzeichnet, daß die Bewegung der Bündelader (2) zwischen Vorrat und Abzug (5) mittels eines mit dem Abzug (5) verbundenen Meßgeräts (6) erfaßt wird, durch welches der Abzug (5) bei still stehender Bündelader (2) angehalten wird.

3. Verfahren nach Anspruch 1 oder 2, dadurch gekennzeichnet, daß der aufgetrennte Schlauch (3) im Bereich des Schutzelements (13) von den Lichtwellenleitern (4) entfernt wird.

4. Verfahren nach einem der Ansprüche 1 bis 3, dadurch gekennzeichnet, daß die Lichtwellenleiter (4) mit geregelter Drehzahl einzeln auf Spulen (8) aufgewickelt werden.

5. Verfahren nach einem der Ansprüche 1 bis 4, dadurch gekennzeichnet, daß die beim Aufwickeln der Lichtwellenleiter (4) auf dieselben einwirkende Zugkraft eingestellt wird.

6. Verfahren nach einem der Ansprüche 1 bis 5, dadurch gekennzeichnet, daß die Lichtwellenleiter (4) vor dem Aufwickeln gereinigt werden.

7. Verfahren nach einem der Ansprüche 1 bis 6, dadurch gekennzeichnet, daß das Schutzrohr (13) gekühlt wird.

8. Verfahren nach einem der Ansprüche 1 bis 7, dadurch gekennzeichnet, daß der Schlauch (3) an zwei oder mehr in Umfangsrichtung gegeneinander versetzten Stellen aufgetrennt wird.

9. Verfahren nach einem der Ansprüche 1 bis 8, dadurch gekennzeichnet, daß der aufgetrennte Schlauch (3) kontinuierlich in kleine Teile zerlegt wird.

10. Verfahren nach einem der Ansprüche 1 bis 8, dadurch gekennzeichnet, daß der aufgetrennte Schlauch (3) auf eine Spule (16) aufgewickelt wird.

11. Verfahren nach einem der Ansprüche 1 bis 10, dadurch gekennzeichnet, daß der aufgetrennte Schlauch (3) hinter der Trennvorrichtung (7) zusätzlich abgezogen wird.

12. Vorrichtung zur Durchführung des Verfahrens nach einem der Ansprüche 1 bis 11, gekennzeichnet durch einen Vorratsbehälter (1) für eine Lichtwellenleiter (4) enthaltende Bündelader (2), einen Abzug (5) für die Bündelader (2), eine Trennvorrichtung (7) mit Schutzelement (13) zur Freilegung der Lichtwellenleiter (4) und drehzahlgeregelte Spulen (8) zur Aufnahme der Lichtwellenleiter (4).

13. Vorrichtung nach Anspruch 12, dadurch gekennzeichnet, daß das Schutzelement (13) als langgestreckter, quer zu seiner Hauptrichtung gebogener Steg ausgebildet ist.

14. Vorrichtung nach Anspruch 12, dadurch gekennzeichnet, daß das Schutzelement (13) als Rohr ausgebildet ist. '

15. Vorrichtung nach einem der Ansprüche 12 bis 14, dadurch gekennzeichnet, daß der Abzug (5) als Raupenabzug ausgebildet ist.

16. Vorrichtung nach einem der Ansprüche 12 bis 14, dadurch gekennzeichnet, daß der Abzug (5) als Scheibenabzug ausgebildet ist.

17. Vorrichtung nach einem der Ansprüche 12 bis 16, dadurch gekennzeichnet, daß der Abzug (5) in Bewegungsrichtung der Bündelader (2) gesehen vor der Trennvorrichtung (7) angeordnet ist.

18. Vorrichtung nach einem der Ansprüche 12 bis 16, dadurch gekennzeichnet, daß der Abzug (5) in Bewegungsrichtung der Bündelader (2) gesehen hinter der Trennvorrichtung (7) angeordnet ist.

19. Vorrichtung nach einem der Ansprüche 12 bis 18, dadurch gekennzeichnet, daß als Trennwerkzeug (14) mindestens ein Messer angeordnet ist.

20. Vorrichtung nach einem der Ansprüche 12 bis 18, dadurch gekennzeichnet, daß als Trennwerkzeug (14) mindestens eine drehbare Säge angeordnet ist.

21. Vorrichtung nach einem der Ansprüche 12 bis 18, dadurch gekennzeichnet, daß als Trennwerkzeug (14) mindestens ein Reibrad angeordnet ist.

22. Vorrichtung nach einem der Ansprüche 12 bis 21, dadurch gekennzeichnet, daß für den aufgetrennten Schlauch (3) hinter der Trennvorrichtung (7) ein zusätzlicher Abzug angeordnet ist.

Fig. 1

Fig. 2

Fig. 3

EP 0 328 748 A2

F/09-88